# EUROPÄISCHE PATENTSCHRIFT

(11) **EP 3 837 976 B1**
(45) Veröffentlichungstag und Bekanntmachung des Hinweises auf die Patenterteilung: **04.10.2023**
(21) Anmeldenummer: 20207906.7
(22) Anmeldetag: 16.11.2020
(51) Int. Cl.: A01M 19/00, A01M 21/04

(54) **VORRICHTUNG ZUR BEKÄMPFUNG UNERWÜNSCHTER LEBEWESEN**
DEVICE FOR CONTROLLING UNDESIRABLE ORGANISMS
DISPOSITIF DE LUTTE CONTRE LES ORGANISMES VIVANTS INDÉSIRABLES

(30) Priorität: 17.12.2019 DE 102019219896
(43) Veröffentlichungstag der Anmeldung: 23.06.2021
(73) Patentinhaber: Deere & Company, Moline, IL 61265 (US)
(72) Erfinder: Haiges, Wolfram, 68163 Mannheim (DE); Correns, Nico, 68163 Mannheim (DE)
(74) Vertreter: Holst, Sönke

(56) Entgegenhaltungen:
- WO-A2-00/41563
- WO-A2-2013/109165
- DE-A1- 2 328 705
- KR-A- 20140 005 523
- RU-C1- 2 492 646
- US-A- 5 804 065
- US-A1- 2008 222 942
- US-A1- 2016 050 902
- US-B1- 6 171 098

## Beschreibung

### Stand der Technik

In der Pflanzenbau betreibenden Landwirtschaft wachsen in der Regel nicht nur die auf einem Feld angebauten, gewünschten Pflanzen, sondern es siedeln sich dort auch ungewünschte Lebewesen an, bei denen es sich um Wild- oder Beikräuter oder -gräser (auch als Unkraut bezeichnet), Nutzpflanzen von einem vorherigen Anbau, die nicht mehr erwünscht sind, aktuell angebaute, jedoch überschüssige Nutzpflanzen, die zu entfernen sind, Pilze oder Insekten handeln kann. Ein Bedürfnis zur Bekämpfung von ungewünschten Lebewesen findet sich jedoch auch im häuslichen Bereich, um z.B. in einem Rasen oder in Fugen zwischen Pflastersteinen wachsende Wildkräuter zu bekämpfen.

Um keine allzu großen Ertragsminderungen durch die unerwünschten Lebewesen hinnehmen zu müssen, ist es in der Landwirtschaft und im Gartenbau gebräuchliche Praxis, Spritzmittel auszubringen, um diese unerwünschten Lebewesen zu bekämpfen. Hierzu bedient man sich einer Feldspritze, die als selbstfahrendes oder gezogenes Fahrzeug oder als Anbaugerät ausgeführt sein kann und entweder das ganze Feld mit dem Spritzmittel beaufschlagt, unter der Voraussetzung, dass die Nutzpflanzen gegen das Spritzmittel resistent sind, oder das Spritzmittel selektiv nur dort auszubringt, wo es tatsächlich benötigt wird (s. DE 10 2017 205 293 A1). Zur selektiven Ausbringung von Spritzmitteln sind im Stand der Technik im Wesentlichen zwei Vorgehensweisen bekannt:
Einerseits besteht die Möglichkeit, in eine elektronische Karte des Feldes die Standorte einzutragen, an denen sich unerwünschte Lebewesen befinden. Diese Karte kann bei einer vor dem Spritzvorgang durchgeführten Erkundung des Feldes erstellt werden, sei es auf manuelle Art und Weise oder mittels eines Sensors, der sich auf einem Fahrzeug oder Fluggerät befindet (vgl. z.B. U. Shapira et al., Field spectroscopy for weed detection in wheat and chickpea fields, International Journal of Remote Sensing, 2013, Vol. 34, No. 17, S. 6094-6108 oder M. Koller et al., Site-specific herbicide applications based on weed maps provide effective control, California Agriculture, Vol. 59, Nr. 3, S.182-187). Die Ansteuerung der Düsen der Feldspritze erfolgt automatisch, basierend auf der Karte und der aktuellen Position der Feldspritze.

Andererseits besteht auch die Möglichkeit, die Feldspritze bzw. ein sie ziehendes oder tragendes Fahrzeug mit einem lokalen Sensor für unerwünschte Lebewesen auszustatten und diese während der Fahrt (online) zu erfassen, um die Düsen der Feldspritze im Sinne einer Beaufschlagung der erfassten, unerwünschten Lebewesen mit dem Spritzmittel anzusteuern (vgl. z.B. H. Böttgeret al, Neue Technik zur variablen Spritzmitteldosierung, Landtechnik 3/2003, S. 142 - 143 oder US 20180111148 A1 mit elektrostatischer Ladung des Sprühnebels).

Andere Ansätze zur Bekämpfung unerwünschter Organismen beruhen auf einer mechanischen Bearbeitung erkannter, unerwünschter Pflanzen (DE 196 48 111 A1) oder auf Anwendung von heißem Wasser, Plasma oder elektromagnetischer Wellen (DE 10 2016 205 336 A1, JP 2017-158533 A, WO 2004/089075 A2, DE 40 39 797 A1) oder auf einer Beaufschlagung mit elektrischem Strom bzw. Hochspannung zur so genannten Elektrokution (EP 3 415 004 A1, FR 2 487 168 A1, FR 2 473 265 A1, US 20060265946 A1, US 20180325091 A1, WO 2018/050138 A1, CN 2255149 Y).

Bei der Pflanzenbekämpfung mit elektrischem Strom fließt der Strom von einem Generator über eine erste Elektrode, durch die Pflanze, durch das Erdreich und über eine weitere Elektrode zurück zum Generator. Durch Schließen des Stromkreises werden die Teile der Pflanze erwärmt, durch die der Strom fließt. Wenn in einer genügenden Anzahl der Zellen der Pflanze der Siedepunkt überschritten wird, stirbt diese ab. Eine Schädigung der Zellen tritt aber schon vor dem Siedepunkt auf. Solange man nicht einen direkten mechanischen und elektrischen Kontakt zwischen der Pflanze und der ersten Elektrode (wie in FR 2 473 265 A1 oder WO 2018/050138 A1) herstellt, sondern einen gewissen Abstand zwischen der Elektrode und der Pflanze vorsieht, wird der Stromkreis zwischen der ersten Elektrode und der Pflanze durch eine Funkenstrecke hergestellt. Eine Funkenstrecke ist der Entladungsraum zwischen zwei Leitern (hier: erste Elektrode und Pflanze), in dem sich ein Gas (hier: Luft) befindet. Steigt die Spannung zwischen den beiden Leitern auf die Überschlagspannung an, so führt das entstehende elektrische Feld zu einer lonisation des im Entladungsraum befindlichen Gases. Dieses wird leitfähig und die Strecke wird aufgrund der Stoßionisation innerhalb von Bruchteilen einer Mikrosekunde durch einen Funken (kurz)geschlossen. Die Überschlagspannung einer Funkenstrecke sinkt durch ionisierende Strahlung und Feuchtigkeit ab. Die Entstehung von Funkenstrecken kann demnach durch ionisierende Strahlung (Ultraviolettstrahlung, Röntgenstrahlung, Gammastrahlung, geladene Teilchen) erleichtert werden. In der trockenen Luft unter Standardbedingungen (Atmosphärendruck) werden je nach vorherrschendem Gas pro Millimeter zwischen den Leitern etwa 1 kV bis zum Überschlag eines Funkens benötigt. Dieser Wert kann durch die Art des Gases bzw. Gasgemisches und je nach Luftfeuchte und Luftdruck erheblich schwanken und abweichen.

Die Pflanzenbekämpfung mit Hilfe von elektrischem Strom (Elektro-Herbizid) in der jetzigen Form ist ein innovatives Verfahren mit vielen Vorteilen, aber auch mit gravierenden Nachteilen. Vorteile:liegen beispielsweise darin, dass sie besser als die mechanische Bekämpfung funktioniert, da man zeitlich flexibler ist. Einerseits kann früher im Bestand gearbeitet werden, weil bei der mechanischen Bearbeitung erst ab einem späteren Zustand gearbeitet werden kann, wenn die Nutzpflanze robust genug ist. Andererseits kann die Bekämpfung auch später erfolgen, weil größere Unkräuter bekämpft werden können. Sie ist mindestens so effizient wie die Bekämpfung mit Chemikalien, auch die Wurzeln der Pflanzen werden geschädigt, und es besteht keine Notwendigkeit, die Unkrautart zu berücksichtigen, denn es müssen keine unterschiedlichen, auf eine bestimmte Unkrautart abgestimmte Herbizide angewendet werden. Herbizid-Resistenzen können nicht entstehen, es erfolgt keine Belastung der Nutzpflanze durch Herbizide, keine Belastung der Böden mit Rückständen, keine Belastung vom Grundwasser mit Rückständen, keine Belastung von Oberflächen-Gewässern mit Chemikalien und es ist kein komplexes Behandlungsschema erforderlich.

Nachteilig bei der Bekämpfung der unerwünschten Lebewesen mit Hochspannung ist hingegen, dass nicht genau vorherbestimmbar ist, wo sich die Funkenstrecke im Einzelfall aufbaut. Selbst der kürzeste Abstand zwischen Elektrode und Pflanze bietet keine Sicherheit, dass sich genau dort die Funkenstrecke aufbaut. Der Widerstand des gesamten Stromkreises ist entscheidend, und dieser hängt von vielen Faktoren ab. Bei derzeitigen Systemen zur Pflanzenbekämpfung mit Hochspannung beträgt die Vortriebs-Geschwindigkeit der Systeme somit nur max. 10 km/h. Bei Feldspritzen mit chemischen Mitteln beträgt die Geschwindigkeit in der Regel 20 bis 30 km/h. Die Arbeitsbreite ist relativ gering, ca. 6 m, während sie bei jetzigen Feldspritzen bis 40 m beträgt. Es ist ein direkter Kontakt oder sehr kleiner Abstand zwischen Elektrode und Pflanze notwendig. Es können nur große Unkräuter zwischen kleinen Nutzpflanzen bekämpft werden bzw. bei gleicher Höhe werden alle Pflanzen getroffen. Die Pflanzen dürfen nicht zu trocken sein. Falls der Boden zu trocken ist, funktioniert das Verfahren nicht (zu hoher Widerstand des Bodens). Es besteht Brandgefahr auf den Feldern und Tiere, die sich im Arbeitsbereich befinden, werden mit getroffen. Der Energieverbrauch ist erheblich, da alle Pflanzen und Pflanzenteile in der Regel mehrfach getroffen werden, weil sich der Strom immer den Weg des geringsten Widerstandes sucht.

Ein Vergleich der Flächenleistung zwischen den Verfahren ergibt bei jetzigen Feldspritzen 40 m x 30 km/h = 20.000 m²/min und beim Elektro-Herbizid 6 m x 10 km/h = 1.000 m²/min. Die jetzigen Feldspritzen sind demnach ca. 20-mal produktiver und können ebenfalls gezielt Unkraut bekämpfen.

Die US 2008/0222942 A1 beschreibt eine Vorgehensweise zur Auffindung von unterirdischen Bauten und Gängen von Nagetieren mittels Sensoren. Die Nagetiere werden ggf. durch elektrischen Strom oder Fluten des Baus mit Wasser abgetötet. Die DE 23 28 705 A1 und die KR 2014 0005523 A beschreiben Anordnungen zur Bekämpfung von Schädlingen mittels eines unter Spannung gesetzten Wasserstrahls, die über den Boden eines Felds bewegt werden, d.h. sukzessive das ganze Feld bearbeiten, und die US 2016/0050902 A1 eine Maschine zur Bekämpfung von Nematoden im Boden durch Stromstöße, deren Intensität von einer gemessenen Leitfähigkeit des Bodens abhängt.

### Aufgabe

Es wurde zwar versucht, eine gezieltere Übertragung des Stroms auf bestimmte Zielpflanzen zu erzielen, indem man die sich im mechanischen und somit elektrischem Kontrakt mit der Pflanze befindlichen Elektroden mit Wasser benetzt (FR 2 473 265 A1) oder die der zu bekämpfenden Pflanze benachbarte Elektrode selbsttätig in ihrer Position verstellt, um eine hinreichende Nähe oder einen Kontakt zur unerwünschten Pflanze herzustellen (DE 40 39 797 A1, US 20180325091 A1, WO 2018/050138 A1), was aber dennoch nicht in allen Fällen sicherstellen kann, dass der Stromüberschlag an der gewünschten Stelle erfolgt. Auch wurde vorgeschlagen, den Inhalt eines Wassertanks einer Handspritze zur Bekämpfung von Pflanzenkrankheiten und Insekten unter Hochspannung zu setzen, um die unerwünschten Lebewesen durch den unter Hochspannung stehenden Sprühnebel zu schädigen, während die Nutzpflanzen durch die relativ kleinen Ströme nicht geschädigt werden (CN 2255149 Y). Diese Vorgehensweise beruht nicht auf einem Funkenüberschlag, sondern auf einer Ladungs-Übertragung durch die einzelnen Wassertropfen, die sich allenfalls dazu eignet, kleinere Organismen abzutöten (Keime und Schädlinge), nicht aber ganze Pflanzen zu bekämpfen. Zudem steht dort die Sprühdüse permanent unter Hochspannung, was aus Gründen der Arbeitssicherheit nicht vorteilhaft ist.

Die der Erfindung zu Grunde liegende Aufgabe wird darin gesehen, eine auf der Anwendung elektrischen Stroms beruhende Vorrichtung zur Bekämpfung unerwünschter Lebewesen bereitzustellen, bei welchen die erwähnten Nachteile nicht oder in vermindertem Maße auftreten und das insbesondere eine zielgerichtete Bekämpfung ermöglicht.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Vorrichtung zur Bekämpfung unerwünschter Lebewesen mittels elektrischen Stroms umfasst eine Sensorik zur selbsttätigen Erkennung eines unerwünschten Lebewesens und eine Hochspannungsquelle, die mit einer ersten Elektrode, welche in eine dem unerwünschten Lebewesen benachbarte, jedoch davon beabstandete Position verbringbar ist und einer zweiten, geerdeten Elektrode verbunden ist, um durch einen Ladungsübergang über den Abstand zwischen der ersten Elektrode und das Lebewesen hinweg einen Stromfluss durch das unerwünschte Lebewesen zu erzielen. Es sind Mittel zur gezielten Erhöhung der Leitfähigkeit der Luft zwischen der ersten Elektrode und dem Lebewesen und eine Steuerung vorgesehen, die konfiguriert ist, die Mittel basierend auf den Signalen der Sensorik zu kontrollieren.

Statt eines direkten Kontaktes bzw. geringen Abstandes zwischen dem zu bekämpfenden Lebewesen, bei dem es sich um eine Pflanze, ein Tier (z.B. Insekt) oder einen Pilz handeln kann (und das im Folgenden zur Vereinfachung als Zielpflanze oder Pflanze bezeichnet wird) und der ersten Elektrode ist mit anderen Worten ein Abstand vorgesehen, der beispielsweise ca. 350 mm betragen kann. Dieser Abstand ist ein Kompromiss zwischen der Handhabbarkeit eines mit einer oder mehreren, seitlich nebeneinander angeordneten Elektroden ausgestatteten Auslegers, der über ein Feld bewegt wird, und dem technischen (insbesondere elektrischen) Aufwand für die Überbrückung des Abstandes. Zur Überbrückung dieses Abstandes mit einer Funkenstrecke würden ca. 350.000 Volt benötigt, wobei man keinerlei Kontrolle darüber hätte, an welcher Stelle der Einschlag tatsächlich erfolgt. Um genau die Pflanze zu treffen, die man bekämpfen will, wird vorgeschlagen, auf der Linie von der ersten Elektrode zur mittels einer Sensorik erkannten Zielpflanze gezielt die Leitfähigkeit der Luft deutlich zu erhöhen. Durch die Erhöhung der Leitfähigkeit sinkt gleichzeitig die Größe der benötigten Spannung und der Einschlag erfolgt an der gewünschten Stelle.

Auf diese Weise kann gezielt die Zielpflanze bekämpft werden, ohne Nutzpflanzen im nahen Umfeld oder die Umwelt zu schädigen. Die hohe Produktivität der jetzigen Spritz-Systeme wird trotzdem erreicht.

Eine erhöhte Leitfähigkeit zwischen der Elektrode und der Zielpflanze lässt sich insbesondere auf zweierlei Wegen erreichen:
(a) Mit einem dünnen Wasserstrahl wird der Abstand zwischen Elektrode und Zielpflanze überbrückt. Die Leitfähigkeit des Wassers kann durch eine erhöhte lonenkonzentration verbessert werden (z.B. Zusatz von geringen Mengen eines Flüssigdüngers). Sobald die Wasserbrücke aufgebaut ist, wird ein Stromimpuls ausgelöst. Der Strom fließt dann ausschließlich von der ersten Elektrode durch die Zielpflanze. So führt das entstehende elektrische Feld zu einer lonisation des im Entladungsraum zwischen der ersten Elektrode und dem zu bekämpfenden Lebewesen befindlichen Gases. Dieses wird leitfähig und die Strecke wird aufgrund der Stoßionisation innerhalb von Bruchteilen einer Mikrosekunde durch einen Funken kurzgeschlossen.
(b) Mit einem ultrakurzen Laserpuls wird ein Plasma-Kanal erzeugt, der die elektrische Leitfähigkeit der Luft gravierend erhöht. Mit diesem Laserstrahl wird durch eine Elektrode auf das zu bekämpfende Lebewesen gezielt. Der Stromimpuls wird dann analog zur Wasserstrahllösung ausgelöst. Die eventuelle Wirkung des Lasers auf der Pflanze bzw. Lebewesen ist grundsätzlich nur ein Nebeneffekt. Eine isolierende Schicht auf dem Lebewesen könnte allerdings mit dem Laserstrahl durchdrungen werden, um einen ausreichenden Stromfluss zu erzielen.

Der Stromkreis wird von der Düse des Wasserstrahles bzw. von der metallischen Ringblende vor dem Laser über den oberirdischen Teil der Pflanze, die Wurzel und den Boden zur zweiten Elektrode und dem Impulsgenerator geschlossen.

Die zweite Elektrode könnte ein einfacher Schleifkontakt auf dem Boden, eine Zinke oder eine Sechscheibe (ein schneidendes Aggregat) sein. Diese Scheibe kann ohne großen Kraftaufwand ca. 10-15cm in den Boden gedrückt werden. Wegen der besseren Leitfähigkeit in tieferen Bodenschichten sollte die zweite Elektrode möglichst tiefere Bodenschichten erreichen. In der Nähe der Zielpflanzen sollte sich auch die jeweilige zweite Elektrode befinden. Die zweite Elektrode könnte auch durch einen zweiten Wasserstrahl oder Plasmakanal realisiert werden, der auf den Erdboden oder eine andere Stelle des unerwünschten Lebewesens gerichtet ist. (z.B. bei Fluggeräten).

Die Steuerung ist konfiguriert, die auf ein unerwünschtes Lebewesen übertragene elektrische Energiemenge basierend auf einer mittels der Sensorik erkannten Eigenschaft des Lebewesens zu kontrollieren. Die Eigenschaft kann die Größe des Lebewesens und/oder ein Trockenheitsgrad des Lebewesens und/oder dessen Temperatur sein. Bei größeren Pflanzen ist es z.B. ausreichend, die Wurzeln nachhaltig zu schädigen. Die elektrische Impulsenergie sollte entsprechend des Bedarfes regel- bzw. steuerbar sein. Ist die Energiemenge je Impuls erreicht, ist die Funkenstrecke zu löschen. Bei großen Pflanzen wird in der Regel mehr Energie benötigt als bei kleinen Pflanzen, um statistisch ein sicheres Ergebnis zu erreichen. Entsprechend der Pflanzenart und der Bodenbeschaffenheit ist die Form (insbesondere Länge und/oder Höhe) des elektrischen Impulses unterschiedlich.

Die Steuerung kann konfiguriert sein, mittels des Wasserstrahls oder eines anderen Wasserstrahls die Temperatur des Lebewesens nötigenfalls zu reduzieren. Da bei trockenem Wetter eine potentielle Brandgefahr besteht, sollte bei Bedarf die Temperatur der getroffenen Pflanzenteile bzw. deren Trockenheitsgrad z. B. mit einer Wärmebildkamera überprüft werden. Falls die Zündtemperatur der Pflanzen fast erreicht ist, sollte entweder die Impulsenergie reduziert (noch ausreichend für das Ziel) oder/und mit einem veränderten oder weiteren Wasserstrahl die Temperatur der Pflanzenteile gesenkt werden.

Die Düsen bzw. die Laser können auf verschiedene Weise auf die Zielpflanze ausgerichtet werden. In der einen Achse (Fahrtrichtung) wird in der Regel die Eigenbewegung des Fahrzeuges oder Roboters genutzt, an dem die Vorrichtung angebracht ist. Ein geeignetes Fahrzeug ist beispielsweise in der EP 3 406 138 A2 gezeigt, deren Offenbarung durch Verweis mit in die vorliegenden Unterlagen aufgenommen wird. In besonderen Fällen könnte auch ein Kippen oder/und Verschieben in dieser Achse sinnvoll sein. In der Achse quer zur Fahrtrichtung werden die Düsen bzw. die Laser verschoben oder gekippt. Es gibt mehrere Möglichkeiten, um die Zielpflanze optimal zu treffen. Die Wasserstrahldüse kann wird in Fahrtrichtung (z.B. 15 Grad) geneigt und quer zur Fahrtrichtung gekippt oder verschoben werden, um eine Zielpflanze zu treffen. Oder eine Kombination aus verschiedenen Düsen ergibt einen überlagerten Strahl, der dann in eine andere Richtung geht .Die Einflussfaktoren wie Fahrgeschwindigkeit, Eigenbewegung des Gestelles, Wind und Hangneigung sind bei der Bestimmung des Vorhaltemaßes zu berücksichtigen. Bei der Verwendung des Lasers zur Erzeugung des Kanals mit ionisierender Luft spielen die Fahrgeschwindigkeit und die Windgeschwindigkeit keine Rolle, da der Aufbau des ionisierten Luftkanals und der Funkenstrecke im Buchteil einer 1/1000 Sekunde erfolgt. Ein Laser mit Faserkopplung und Multiplexer, der alle Einheiten seriell mit ausreichend Laserleistung versorgt, oder Laser an jeder Einheit sind möglich. Die Hochspannung sollte durch einen Generator zentral oder durch mehrere Generatoren dezentral erzeugt werden.

Die Steuerung ist vorzugsweise konfiguriert, die erste Elektrode erst dann mit Hochspannung zu beaufschlagen, nachdem die Steuerung die Mittel zur gezielten Erhöhung der Leitfähigkeit der Luft zwischen der ersten Elektrode und dem Lebewesen aktiviert hat. Dadurch vermeidet man, dass die erste Elektrode permanent unter Hochspannung steht und unkontrollierte Funkenüberschläge entstehen können.

Um einen stabileren Strahl zu erhalten, könnten dem Wasser Stärke, Eiweiß, Zellulose oder andere Stoffe zugesetzt werden. Der Zusatz sollte keine negativen Eigenschaften für die Nutzpflanze haben und rückstandsfrei abbaubar sein. Es sollte quasi ein dünner Faden mit einer guten elektrischen Leitfähigkeit zwischen Elektrode und Zielpflanze für den Bruchteil einer Sekunde entstehen.

Vorzugsweise ist die Anzahl der Hochspannungs-Elektroden gleich der Anzahl der in einem Arbeitsgang zu überfahrenden Saatreihen. Es könnte aber auch eine kleinere oder größere Anzahl sinnvoll sein. Durch eine mehrdimensionale Bildverarbeitung wird die Position der Zielpflanze in Bezug auf die Maschine ermittelt.

Wenn die Stärke des Stromes (Impulses) nicht größer ist als die eines Weidezaunes, besteht auch keine Gefährdung von Menschen. Bei höheren Stromstärken ist das System mit entsprechenden Vorrichtungen abzusichern.

Es könnte Gleich- oder Wechselstrom eingesetzt werden. Zusammen mit der Stärke und der Dauer des Stromes (Impulses) ergeben sich die Wirkungen in den getroffenen Objekten.

Mögliche Anwendungsfälle der erfindungsgemäßen Vorrichtung sind Folgende:
- Selektive Bekämpfung von Schädlingen:
   Mit diesem Verfahren können gezielt Schädlinge an den Pflanzen und auf der Erdoberfläche mit einem letalen Impuls bekämpft werden. Die Wirkung des Stromes könnte auf das Nervensystem bzw. auf die Zellen wirken. Die Körper der toten Schädlinge sind nicht durch Gifte belastet.
- Schädlinge an den Wurzeln:
   Z.B.: Die Larve des Westlichen Maiswurzelbohrers Diabrotica Virgifera ernährt sich von den Kronwurzeln der Maispflanzen. Diese Kronwurzeln sind reich an Nährstoffen und damit gute elektrische Leiter. Die Larven sind ebenfalls gute Leiter für den elektrischen Strom. Der Stromfluss wird somit durch die Larven erfolgen. Ein letaler Stromimpuls für die Larven führt an der Maispflanze zu keinen oder nur geringen Schäden. Der elektrische Strom sollte nah am Boden direkt in den Stamm der Pflanze eingeleitet werden, um die Nutzpflanze möglichst wenig oder nicht zu schaden. Wenn die Bekämpfung der Schädlinge im zeitlichen Zusammenhang mit der Ernte erfolgt, sollte die Stärke des Stromimpulses deutlich höher sein, als bei der Pflege im Bestand. Eine Schädigung der Pflanzen spielt im Zusammenhang mit der Ernte keine Rolle, aber die Wirkung auf die Schädlinge wird nochmals deutlich erhöht. Dabei kann das System z.B. am Maisgebiss eines Feldhäckslers oder Maispflücker eines Mähdreschers angebracht werden.
- Selektive Vertreibung als Schutz für Tiere:
   Mit diesem Verfahren können gezielt Tiere vertrieben werden, wenn die Stärke des Impulses zwar unangenehm, aber nicht letal für das Tier ist. Der Strom sollte ausschließlich auf das Nervensystem wirken. Durch einen Anbau an der Maschine werden auf der Spur, die als nächstes abgeerntet werden soll, die Tiere (seien es Säugetiere, Insekten oder Vögel) selektiv vertrieben. Die Stärke des Impulses wird nach dem Erkennen des Tieres festgelegt. Die zweiten Elektroden könnte bei dieser Applikation durch einen zweiten Wasserstrahl realisiert werden.
- Selektieren von Nutzpflanzen:
   Es ist das Ausdünnen, Pikieren und Verziehen von Pflanzen möglich. Pflanzen brauchen Platz, um sich zu entwickeln. Und das sowohl über als auch unter der Erde. Ansonsten machen sie sich gegenseitig Raum, Licht und Nährstoffe streitig, die sie alle zum Wachsen benötigen. Die Folge: Die Pflanzen wachsen nur kümmerlich, können sich nicht voll entfalten - und die Ernte kann entsprechend mager ausfallen. Das oben beschriebene Verfahren ist auch geeignet dies zusammen mit der Unkrautbekämpfung durchzuführen.
- Krautminderung bei Kartoffeln:
   Im konventionellen Anbau ist es gängige Praxis, zunächst den Krautschläger einzusetzen. Das allein reicht in den meisten Fällen aber nicht aus, um einen Wiederaustrieb der Bestände sowie der damit einhergehenden Ertrags- und Qualitätsbeeinträchtigungen zu vermeiden. Deshalb kommt der Krautschläger üblicherweise in Kombination mit einem chemischen Sikkativ zum Einsatz. Auch im ökologischen Anbau reicht das Krautschlagen allein oft nicht aus. Mit einem gezielten Stromimpuls (wie oben beschrieben) wird elektrische Hochspannung durch die Pflanze geleitet. Ziel ist es, dass die Zellen in den durchströmten Pflanzenbereichen ohne relevante Hitzeeinwirkung soweit zerstört werden, dass die Wasserversorgung in der Pflanze unterbrochen wird und sie austrocknet. Dies würde das Kraut und die Wurzeln betreffen.
- Einsatz an Fluggeräten, z.B. Drohnen:
   Bei Fluggeräten gibt es zwei Verfahren zur Impulserzeugung:
   1. Der Generator befindet sich an Bord und die zweite Elektrode wird durch einen zweiten Wasserstrahl realisiert.
   2. Da bei Fluggeräten eine elektrostatische Aufladung gegenüber dem Boden entsteht, ist auch diese als Spannungsquelle nutzbar. Ursache der Potentialdifferenz ist eine Aufladung durch Reibungselektrizität (triboelektrischer Effekt). Der Potentialausgleich (Impuls) erfolgt über den Wasserstrahl.
- Kombination von elektrischer und mechanischer Unkrautbekämpfung:
   Zwischen den Saatreihen wird das Unkraut mechanisch bekämpft und in den Saatreihen erfolgt die Bekämpfung elektrisch.
- Autonomes Fahren, z.B. Mähroboter:
   Die oben beschriebenen Verfahren sind auch an (Mäh-) Robotern adaptierbar, wobei dabei wahrscheinlich die Zweistrahl-Lösung mit einem ersten Strahl zur Bekämpfung des Lebewesens und einem zweiten Strahl zur Erdung optimal ist. Auch bei Regen kann der (Mäh-) Roboter zur Unkrautbekämpfung auf einem Grundstück, in einem Garten oder einer beliebigen Fläche eingesetzt werden. Es wäre auch denkbar, eine derartige Vorrichtung als handgehaltenes Gerät auszuführen, dessen Mittel zur gezielten Erhöhung der Leitfähigkeit der Luft von einem Bediener, z.B. mittels einer Zielvorrichtung, oder mittels eines Sensors und davon kontrollierten Aktors auf ein zu bekämpfendes Lebewesen ausgerichtet und durch den Bediener durch Betätigung eines Auslösers oder durch den Sensor aktiviert werden. Im ersten Fall würde somit der Bediener als Sensorik und Steuerung agieren. Eine derartige Anordnung kann man beispielsweise zur Bekämpfung von anderen Schädlingen dienen, wie z.B. Eichenprozessionsspinner oder Buchszünsler.
- Abtöten von keimfähigem Rückstand, z.B. Verlustkörnern, im Mähdrescher:
   Als weiteren Punkt könnte man hier auch noch die Schädigung von keimfähigem Rückstand z.B. von Verlustkörnern, am Auslass der Reinigungsanlage aus dem Mähdrescher nennen. Dort gibt es heute vereinzelt mechanische Verfahren (z.B. Hammermühlen) zur Zerstörung der Samen, alternativ Herbizidbehandlungen nach der Ernte. Mit dem Stromstoß ließ sich der keimfähige Rückstand keimunfähig
- Bekämpfung des Borkenkäfers seiner Larven, Puppen und Eier:
   Borkenkäfer bohren sich in die Rinde von noch lebenden Bäumen, legen dort ihre Eier ab und ernähren sich vom Bast, wodurch der Baum in der Regel abstirbt. Insektizide sind nur bedingt zur Bekämpfung des Borkenkäfers geeignet, denn bei einer Anwendung werden diese durch den Wasser- und Nährstoffstrom über den gesamten Baum verteilt. Somit werden alle dort lebenden Insekten geschädigt. Die Wirkung auf die Vogelwelt, z.B. beim Verzehr betroffener Insekten, ist nicht absehbar, ebenso die auf Nützlinge (z.B. Bienen, Jagdkäfer, Ameisenbuntkäfer, Erzwespen etc.). Die Wirkstoffe gelangen über die Wurzeln auch in den Boden. So kann es zu Schädigungen von Bodenlebewesen kommen. Auch das Grundwasser ist dadurch gefährdet.

Der Borkenkäfer und seine verschiedenen Entwicklungsstufen sollten präferiert im stehenden Holz (zur Rettung des Baumes) und im liegenden Holz bekämpft werden können. Hierzu ist vorgesehen, dass die erfindungsgemäßen Düsen für den Hochdruckwasserstrahl direkt (isoliert) oder wenige Millimeter über der Rinde platziert werden. Mit dem Hochdrucksystem (mit einem Druck von beispielsweise ca. 200 bar und einem Strahldurchmesser von wenigen Mikrometer) werden feine Löcher in die Rinde gebohrt. Durch den Wasserstrahl wird die elektrische Verbindung zu den Lebewesen unter der Rinde hergestellt. Da das Bastgewebe eines lebenden Baumes feucht ist, bildet sich dort ein Spannungskegel aus. Selbst wenn die Lebewesen nicht direkt getroffen werden, werden sie durch die Potentialdifferenz im Körper getötet. Die Gegenelektrode ist entweder ein Stachelrad, das bis zum Bast durchdringt, ein zweiter Wasserstrahl oder eine durch Erdung der zweiten Elektrode erzeugte Potentialdifferenz zwischen Baum und der ersten Elektrode. Die Lösung mit einem Laser zur Ionisierung der Luft und zum Durchbohren der Rinde funktioniert ebenfalls.

Diese Einheit könnte ein Zusatzgerät an dem Ernteaggregat eines Harvesters sein. Ein Ring umschließt den Stamm mit den Düsen und den Elektroden. Es ist aber auch eine autonome Einheit denkbar, die an stehenden Bäumen hochklettert und so den Borkenkäfer selektiv oder pauschal bekämpft. Wenn dieser Einsatz rechtzeitig erfolgt, könnte dadurch verhindert werden, dass der Baum abstirbt. Entweder wird der gesamte Stamm bei Verdacht auf Borkenkäferbefall in der beschriebenen Weise behandelt oder mit einer entsprechenden Sensorik werden nur die befallenen Stellen behandelt.

Als Sensorik zur Erkennung des Borkenkäfers kann eine IR-Kamera verwendet werden, die z.B. im Wellenlängenbereich von 3.500 bis 15.000 nm arbeitet. Hiermit ist die Veränderung der Bastschicht am Stamm erkennbar. Diese Veränderung resultiert daraus, dass der Borkenkäfer die Bastschicht zerstört. Die Bilder der Kamera sind mit Bildverarbeitungsalgorithmen auszuwerten. Die Bilder der IR-Kamera sollten durch eine hochauflösende VIS-Kamera ergänzt werden, die die Merkmale erkennt, nach denen ein Mensch urteilt. Weitere Ansätze können Verfahren sein, die emittierende Geräusche oder Abweichungen der Schallausbreitung messen die durch die Käfer und deren Entwicklungsstufen ausgelöst werden (s. DE 10 2008 008 096 A1). Selbstverständlich können auf diese Weise auch andere Schädlinge, wie Eichenprozessionsspinner, bekämpft werden.

### Ausführungsbeispiel

In den Zeichnungen sind zwei nachfolgend näher beschriebene Ausführungsbeispiele der Erfindung dargestellt. Es zeigt:
- Fig. 1: eine seitliche Ansicht einer Maschine zum Ausbringen eines Mittels mit einer zugehörigen Steuerung,
- Fig. 2: ein Schema einer ersten Ausführungsform einer an der Maschine angebrachten Vorrichtung zur Bekämpfung unerwünschter Lebewesen, und
- Fig. 3: ein Schema einer zweiten Ausführungsform einer an der Maschine angebrachten Vorrichtung zur Bekämpfung unerwünschter Lebewesen.

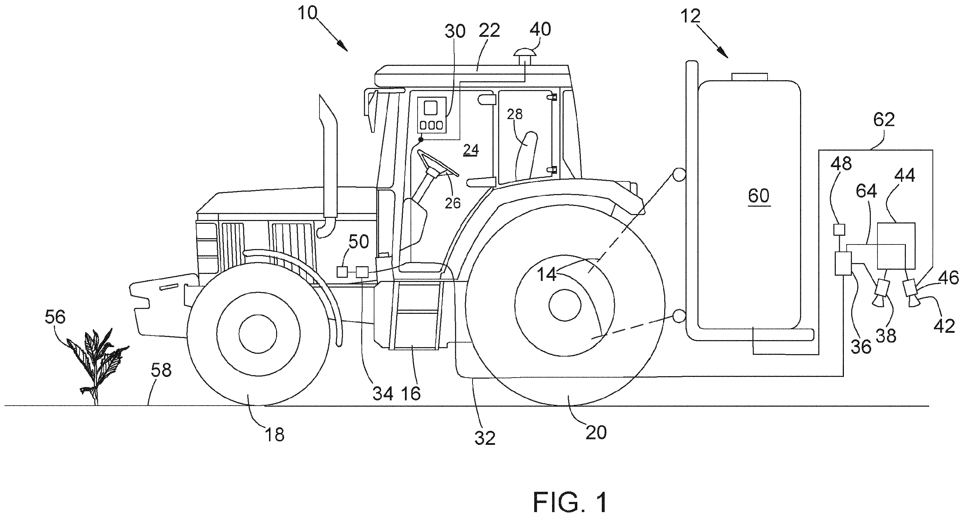

Die Figur 1 zeigt eine seitliche Ansicht einer Maschine 12 zur Bekämpfung unerwünschter Lebewesen, die an einem Dreipunktgestänge 14 eines landwirtschaftlichen Ackerschleppers 10 angebaut ist. Die Maschine 12 könnte auch auf den Ackerschlepper 10 oder ein anderes Fahrzeug (Geräteträger o.ä.) aufgesattelt oder durch den Ackerschlepper 10 gezogen werden, d.h. ein Fahrgestell mit Rädern und einer an einer Kupplung des Ackerschleppers 10 angehängte Deichsel umfassen, oder als selbstfahrendes Fahrzeug (insbesondere Roboter oder Drohne) ausgeführt sein. Der Ackerschlepper 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz 28, Pedale (nicht gezeigt) und eine Bedienerschnittstelle 30.

Die Bedienerschnittstelle 30, bei der es sich um ein so genanntes virtuelles Terminal handeln kann, ist mit einer Datenübertragungseinrichtung 32 verbunden, die in der dargestellten Ausführungsform ein serieller Datenbus sein kann. Mit der Datenübertragungseinrichtung 32 sind weiterhin eine Arbeitsfahrzeugsteuerung 34 des Ackerschleppers 10, eine Steuerung 36 der Maschine 12 und eine Positionsbestimmungseinrichtung 40 verbunden. Alle erwähnten Einrichtungen tauschen während des Betriebs des Ackerschleppers 10 über die Datenübertragungseinrichtung 32 Botschaften untereinander aus. In der Regel sind weitere Kontrolleinheiten (nicht gezeigt) an der Datenübertragungseinrichtung 32 angeschlossen, die zu so genannten Arbeitsensembles (englisch: Working Sets) zusammengefasst sein können, die gemeinsam mit dem virtuellen Terminal 30 und ggf. anderen Kontrolleinheiten oder Arbeitsensembles über die Datenübertragungseinrichtung 32 kommunizieren. Das hier verwendete Protokoll entspricht vorzugsweise der ISO 11783. Es wäre jedoch auch möglich, die erwähnten Einrichtungen direkt untereinander zu verkabeln und/oder ein beliebiges anderes Protokoll zu verwenden.

Die Positionsbestimmungseinrichtung 40 empfängt Signale von Satelliten und ggf. erdgebundenen Sendern und ermittelt daraus die aktuelle Position des Ackerschleppers 10 in zumindest zwei horizontalen Dimensionen und vorzugsweise auch dessen Geschwindigkeit und Fahrtrichtung. Diese Daten werden über die Datenübertragungseinrichtung 32 u.a. an das virtuelle Terminal 30 und an die Steuerung 36 übertragen.

Weiterhin ist eine Reihe an lokalen Sensoren 38 direkt oder über die Datenübertragungseinrichtung 32 mit der Steuerung 36 verbunden. Die lokalen Sensoren 38 sind, über die Arbeitsbreite der Maschine 12 verteilt, an einem Querträger 44 der Maschine 12 angebracht und blicken von dort nach vorn Die lokalen Sensoren 38 umfassen jeweils eine Kamera mit einem Bildsensor und einen Prozessor, auf dem eine Bildverarbeitungssoftware läuft, die es ermöglicht, anhand der Signale des Bildsensors auf einem Feld 58 stehende, unerwünschte Lebewesen 56 zu erkennen, bei dem es sich im gezeigten Beispiel um eine Wildpflanze handelt, die auf dem Feld 58 nicht angebaut wird. Die lokalen Sensoren 38 können somit der Steuerung 36 Daten übersenden, ob und ggf. an welcher Stelle im von ihnen erfassten Bild ein unerwünschtes Lebewesen 56 erkennbar ist. Generell wäre auch denkbar die lokalen Sensoren 38 zur Erkennung der Lebewesen räumlich getrennt von der Aktorik zur Bekämpfung der unerwünschten Lebewesen z.B. an der Vorderseite des Ackerschleppers 10 oder auf einer vor dem Ackerschlepper 10 her fliegenden Drohne zu platzieren und eine drahtlose oder drahtgebundene Übermittlung der Position und des Typs evtl. erkannter unerwünschter Lebewesen an die Aktorik zu übertragen. Durch den größeren Abstand kann, bei gegebenen Reaktionszeiten der Sensoren 38 einschließlich der Bildverarbeitung und der Aktoren der Anordnung 46, eine höhere Fahrgeschwindigkeit realisiert werden, was die Arbeitsproduktivität vergrößert, und/oder rechenzeitintensivere und somit genauere Auswertungen der Bildsignale realisiert werden.

Die Arbeitsfahrzeugsteuerung 34 des Ackerschleppers 10 ist mit einer Geschwindigkeitskontrolleinheit 50 verbunden, welche die Vortriebsgeschwindigkeit des Ackerschleppers 10 vorgibt, indem sie beispielsweise die Drehzahl eines Antriebsmotors des Ackerschleppers 10 und/oder das Übersetzungsverhältnis eines den Antriebsmotor mit den Rädern 20 und ggf. 18 trieblich verbindenden Getriebes kontrolliert. Die Lenkung des Ackerschleppers 10 erfolgt durch den Bediener mittels des Lenkrads 26 oder durch eine selbsttätige Lenksteuerung, die den Ackerschlepper 10 anhand eines geplanten Weges über das Feld 58 führt, insbesondere anhand vorhandener Fahrgassen.

Die Steuerung 36 ist über die Datenübertragungseinrichtung 32 oder eine separate Verbindung mit Anordnungen 46 verbunden, welche zur Bekämpfung der unerwünschten Lebewesen 56 durch Beaufschlagung mit elektrischem Strom dienen.

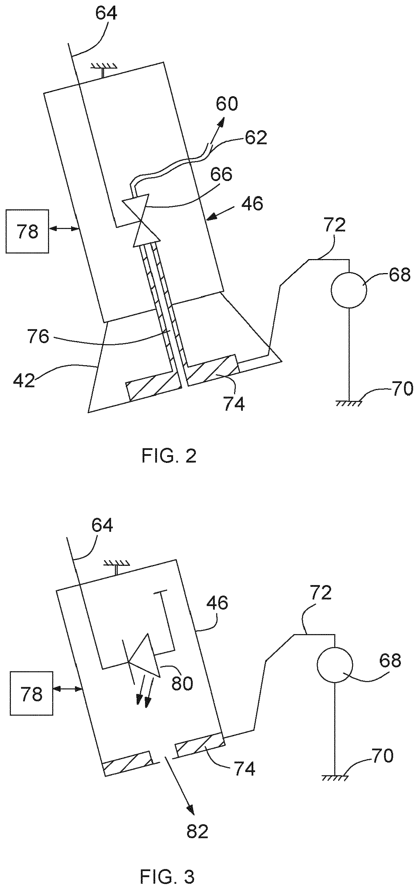

Eine erste Ausführungsform einer Anordnung 46 ist in der Figur 2 gezeigt. Sie umfasst eine Hochspannungsquelle 68, die einen Spannungswandler umfassen kann, der von einem Generator des Ackerschleppers 10 versorgt wird und eine Spannung in der Größenordnung einiger kV und eines Stromes in der Größenordnung einiger mA bereitstellt, der eine ausreichende Wirkung gegen das zu bekämpfende Lebewesen/Pflanze erreicht. Ein Anschluss der Hochspannungsquelle 68, die Gleich- oder Wechselstrom liefern kann, ist über einen Kontakt 70, der als Schleifkontakt oder als in den Boden eindringende Scheibe (Sech) ausgeführt sein kann, geerdet. Weitere Möglichkeit wäre über Schleifkontakte an den Felgen oder die Lagerungen der Räder den Strom von der Hochspannungsquelle über die Räder und hinreichend leitfähige Reifen des Anbaugerätes oder Zugfahrzeugs an die Erde abzuleiten. Der andere Anschluss der Hochspannungsquelle 68 ist über eine Leitung 72 mit einem leitfähigen Ring 74 verbunden, der am Ende eine Düsenanordnung 42 angeordnet ist. Ein Wasser enthaltender Vorratsbehälter 60 ist über eine Leitung 62 mit einem elektromagnetisch gesteuerten Ventil 66 verbunden, das zwischen der Leitung 62 und einer Leitung 76 angeordnet ist, die am Ring 74 endet. Ein optionaler, durch die Steuerung 36 kontrollierter Aktor 78 dient zur Positionsverstellung der Anordnung 46 um eine horizontale, quer zur Vorwärtsrichtung verlaufende Achse und/oder um eine horizontale, in Vorwärtsrichtung verlaufende Achse (oder zum lateralen Verschieben der Anordnung 46 quer zur Vorwärtsrichtung). Das Ventil 66 ist über eine Leitung 64 mit der Steuerung 36 verbunden und wird durch diese kontrolliert.

Es sind vorzugsweise mehrere Anordnungen 46, wie sie in der Figur 2 gezeigt sind, über die Arbeitsbreite der Maschine 12 verteilt. Die Anordnungen 46 sind an der Maschine 12 über den zur Straßenfahrt einfaltbaren Querträger 44 befestigt, der auch die lokalen Sensoren 38 trägt. Mehrere oder alle Anordnungen 46 können sich die Hochspannungsquelle 68 teilen oder es ist jeder Anordnung 46 eine eigene Hochspannungsquelle 68 zugeordnet.

Die Steuerung 36 ist schließlich mit einer Speichereinrichtung 48 verbunden, in welcher zuvor ermittelte Standorte von unerwünschten Lebewesen 56 in einer Karte georeferenziert eingetragen wurden. Die Karte kann bei einer vorigen Überfahrt der Maschine 12 über das Feld 58 mittels der Signale der lokalen Sensoren 38 erzeugt worden sein. Die Aufgaben der Steuerung 36 könnten auch durch eine beliebige andere Steuerung übemommen werden, z.B. durch eine Kontrolleinheit im virtuellen Terminal 30. Das virtuelle Terminal 30 kann dazu dienen, mittels der Steuerung 36 dem Bediener eine Karte des Feldes und die Positionen erwarteter, unerwünschter Lebewesen 56 anzuzeigen, wozu auf die Signale der Positionsbestimmungseinrichtung 40 und die Speichereinrichtung 48 zurückgegriffen werden kann. Zudem ist die Steuerung 36 mit den lokalen Sensoren 36 verbunden.

Die Arbeitsweise der mit einer oder mehreren Anordnungen 46 ausgestatteten Maschine 12 ist derart, dass die Steuerung 36 den Aktor 78 derart kontrolliert, dass ein von der Düse 42 abgegebener Wasserstrahl auf das unerwünschte Lebewesen 56 gerichtet ist, sobald dieses (anhand der Signale eines der lokalen Sensoren 36 und/oder der Karte in der Speichereinrichtung 48) in den Wirkbereich der Anordnung 46 gelangen wird, während der Ackerschlepper 10 mit der Maschine 12 über das Feld fährt. Sobald das unerwünschte Lebewesen 56 im Wirkbereich der Anordnung 46 ist, d.h. innerhalb eines definierten Abstands von z.B. einigen 10 cm, veranlasst die Steuerung 36 das Ventil 66 zu öffnen, um einen Wasserstrahl durch die Düse 42 auf das unerwünschte Lebewesen 56 zu richten. Dieser Wasserstrahl ist durch die Hochspannungsquelle 68 unter Spannung gesetzt, da der Ring 74 als erste, dem Lebewesen 56 benachbarte, aber davon beabstandete Elektrode und der Kontakt 70 als zweite, geerdete Elektrode dient, während das im Boden wachsende Lebewesen 56 selbst geerdet ist. Der Wasserstrahl erleichtert den Übergang des elektrischen Stroms von der ersten Elektrode auf das Lebewesen, da er gezielt die Leitfähigkeit der Luft zwischen der ersten Elektrode und dem Lebewesen vergrößert. Es fließt somit ein gezielter Strom durch das unerwünschte Lebewesen 56, der zu dessen Abtötung ausreicht, ohne dass man mechanische, biologische oder chemische Mittel benötigen würde.

Bei der Ansteuerung der Anordnung 46 durch die Steuerung kann analog zur Vorgehensweise nach DE 10 2017 205 293 A1 vorgegangen werden, deren Offenbarung durch Verweis mit in die vorliegenden Unterlagen aufgenommen wird.

Bei der Ausführungsform nach Figur 2 steht der Ring 74 permanent unter Hochspannung. Man könnte anstelle dessen einen Schalter in die Leitung 72 einfügen, der durch die Steuerung 36 nur dann geschlossen wird, wenn die Steuerung 36 das Ventil 66 öffnet, oder durch die Steuerung 36 die Hochspannungsquelle 68 nur dann einschalten, wenn die Steuerung 36 das Ventil 66 öffnet. Auch könnte ein kurzer zeitlicher Versatz zwischen dem Öffnen des Ventils 66 und der Beaufschlagung des Rings 74 mit Hochspannung liegen, um sicherzustellen, dass der Wasserstrahl das Lebewesen 56 bereits erreicht hat, bevor die Hochspannung an den Ring 74 angelegt wird. Dadurch vermeidet man mögliche Funkenüberschläge zwischen dem Ring 74 und anderen, auf dem Feld befindlichen Gegenständen, bei denen es sich nicht um unerwünschte Lebewesen handelt.

Bei der Anordnung nach Figur 1 und 2 steht das Wasser in der Leitung 62 und somit auch im Vorratsbehälter 60 zumindest temporär unter Hochspannung. Für eine hinreichende elektrische Isolation ist somit Sorge zu tragen.

Die Figur 3 zeigt eine zweite Ausführungsform einer Anordnung, die ohne Vorratsbehälter 60 und Wasserstrahl auskommt, sondern einen hier beispielhaft als Laserdiode eingezeichneten Laser 80 (oder eine andere Quelle für ionisierende (elektromagnetische) Strahlung, z.B. Ultraviolettlicht, Röntgenstrahlung, Gammastrahlung, geladene Teilchen) verwendet, um bedarfsweise gezielt die Leitfähigkeit der Luft zwischen der Anordnung 46 und dem unerwünschten Lebewesen 56 zu vergrößern, indem durch das abgegebene Licht eine Ionisierung der Luft bewerkstelligt wird. Mit der ersten Ausführungsform übereinstimmende Elemente sind mit denselben Bezugszeichen versehen. Am Lichtauslass der Anordnung 46 ist ebenfalls ein leitfähiger Ring 74 angeordnet, der mit der Hochspannungsquelle 68 verbunden ist.

Die Arbeitsweise der mit einer oder mehreren Anordnungen 46 nach Figur 3 ausgestatteten Maschine 12 ist derart, dass die Steuerung 36 den Aktor 78 derart kontrolliert, dass ein vom Laser 80 abgegebener Lichtstrahl auf das unerwünschte Lebewesen 56 gerichtet ist, sobald dieses (anhand der Signale eines der lokalen Sensoren 36 und/oder der Karte in der Speichereinrichtung 48) in den Wirkbereich der Anordnung 46 gelangen wird, während der Ackerschlepper 10 mit der Maschine 12 über das Feld fährt. Sobald das unerwünschte Lebewesen 56 im Wirkbereich der Anordnung 46 ist, d.h. innerhalb eines definierten Abstands von z.B. einigen 10 cm, veranlasst die Steuerung 36 den Laser 80 zu arbeiten, um einen Lichtstrahl durch eine Austrittsöffnung 82 auf das unerwünschte Lebewesen 56 zu richten. Auch bei dieser Ausführungsform dient der Ring 74 als erste, dem Lebewesen 56 benachbarte, aber davon beabstandete Elektrode und der Kontakt 70 als zweite, geerdete Elektrode, während das im Boden wachsende Lebewesen 56 selbst geerdet ist. Der Lichtstrahl ionisiert die Luft zwischen dem Ring 74 und dem Lebewesen 56, d.h. deren Leitfähigkeit ist gegenüber normaler Luft erhöht, was den Übergang des elektrischen Stroms von der ersten Elektrode auf das Lebewesen 56 erleichtert. Es fließt somit ein gezielter Strom durch das unerwünschte Lebewesen 56, der zu dessen Abtötung ausreicht, ohne dass man mechanische, biologische oder chemische Mittel benötigen würde.

Auch bei der Ausführungsform nach Figur 3 steht der Ring 74 permanent unter Hochspannung. Man könnte anstelle dessen einen Schalter in die Leitung 72 einfügen, der durch die Steuerung 72 nur dann geschlossen wird, wenn die Steuerung 36 den Laser 80 bereits eingeschaltet hat, oder durch die Steuerung 36 die Hochspannungsquelle 68 nur dann einschalten, wenn die Steuerung 36 den Laser 80 bereits eingeschaltet hat. Auch könnte ein kurzer zeitlicher Versatz zwischen dem Einschalten des Lasers 80 und der Beaufschlagung des Rings 74 mit Hochspannung liegen, um sicherzustellen, dass der Plasmastrahl das Lebewesen 56 bereits erreicht hat, bevor die Hochspannung an den Ring 74 angelegt wird. Dadurch vermeidet man mögliche Funkenüberschläge zwischen dem Ring 74 und anderen, auf dem Feld befindlichen Gegenständen, bei denen es sich nicht um unerwünschte Lebewesen handelt.

## Patentansprüche

1. Vorrichtung zur Bekämpfung unerwünschter Lebewesen (56) in Form von unerwünschten Pflanzen, Pilzen oder Insekten mittels elektrischen Stroms, mit einer Hochspannungsquelle (68), die mit einer ersten Elektrode (74), welche in eine dem unerwünschten Lebewesen (56) benachbarte, jedoch davon beabstandete Position verbringbar ist und einer zweiten, geerdeten Elektrode (70) verbunden ist, um durch einen Ladungsübergang über den Abstand zwischen der ersten Elektrode (74) und das Lebewesen (56) hinweg einen Stromfluss durch das unerwünschte Lebewesen (56) zu erzielen, und mit Mitteln zur gezielten Erhöhung der Leitfähigkeit der Luft zwischen der ersten Elektrode (74) und dem Lebewesen (56), **dadurch gekennzeichnet, dass** eine Steuerung (36) konfiguriert ist, die Mittel basierend auf den Signalen einer Sensorik (38) zur selbsttätigen Erkennung eines unerwünschten Lebewesens (56) zu kontrollieren, und wobei die Steuerung (36) konfiguriert ist, die auf ein unerwünschtes Lebewesen übertragene elektrische Energiemenge basierend auf einer mittels der Sensorik (36) erkannten Eigenschaft des Lebewesens (56) zu kontrollieren.

2. Vorrichtung nach Anspruch 1, wobei die Mittel zur gezielten Erhöhung der Leitfähigkeit der Luft konfiguriert sind, einen Wasserstrahl oder einen Plasmakanal zu erzeugen.

3. Vorrichtung nach Anspruch 1 oder 2, wobei die Eigenschaft die Größe des Lebewesens (56) und/oder ein Trockenheitsgrad und/oder die Temperatur des Lebewesens (56) ist.

4. Vorrichtung nach Anspruch 3, wenn rückbezogen auf Anspruch 2, wobei die Steuerung (36) konfiguriert ist, mittels des Wasserstrahls oder eines anderen Wasserstrahls die Temperatur des Lebewesens (56) nötigenfalls zu reduzieren.

5. Vorrichtung nach einem der Ansprüche 1 bis 4, wobei die Mittel an einem Fahrzeug angebracht und gegenüber dem Fahrzeug durch einen von der Steuerung kontrollierten Aktor (78) beweglich sind.

6. Vorrichtung nach Anspruch 5, wobei die Mittel durch den Aktor (78) quer zur Fahrtrichtung verschiebbar und/oder um die Hochachse schwenkbar sind und/oder um eine horizontale, quer zur Vorwärtsrichtung orientierte Achse schwenkbar sind.

7. Vorrichtung nach einem der vorhergehenden Ansprüche, wobei die Steuerung (36) konfiguriert ist, die erste Elektrode (74) erst dann mit Hochspannung zu beaufschlagen, nachdem die Steuerung (36) die Mittel zur gezielten Erhöhung der Leitfähigkeit der Luft zwischen der ersten Elektrode (74) und dem Lebewesen (56) aktiviert hat.

## Claims

1. Device for combating unwanted life forms (56) in the form of unwanted plants, fungi or insects by means of electric current, having a high-voltage source (68) that is connected to a first electrode (74) that can be brought into a position adjacent to yet separate from the unwanted life form (56), and to a second, earthed electrode (70), in order to achieve a flow of current through the unwanted life form (56) through a transfer of charge over the gap between the first electrode (74) and the life form (56), and having means for the targeted increase in the conductivity of the air between the first electrode (74) and the life form (56), **characterized in that** a controller (36) is configured to control the means on the basis of the signals of a sensor system (38) for automatically detecting an unwanted life form (56), and wherein the controller (36) is configured to control the quantity of electrical energy transmitted to an unwanted life form on the basis of a property of the life form (56) recognized by means of the sensor system (36).

2. Device according to Claim 1, wherein the means for the targeted increase of the conductivity of the air are configured to generate a water jet or a plasma channel.

3. Device according to Claim 1 or 2, wherein the property is the size of the life form (56) and/or a degree of dryness and/or the temperature of the life form (56).

4. Device according to Claim 3, if referring to Claim 2, wherein the controller (36) is configured if necessary to reduce the temperature of the life form (56) by means of the water jet or of another water jet.

5. Device according to one of Claims 1 to 4, wherein the means are attached to a vehicle and can be moved with respect to the vehicle by an actuator (78) controlled by the controller.

6. Device according to Claim 5, wherein the means can be moved transversely with respect to the direction of travel by the actuator (78) and/or can be pivoted around the vertical axis and/or can be pivoted about a horizontal axis oriented transversely to the forward direction.

7. Device according to one of the preceding claims, wherein the controller (36) is configured not to apply high voltage to the first electrode (74) until after the controller (36) has activated the means for the targeted increase of the conductivity of the air between the first electrode (74) and the life form (56).

## Revendications

1. Dispositif pour lutter contre des organismes indésirables (56) sous la forme de plantes, champignons ou insectes indésirables au moyen de courant électrique, comprenant une source de haute tension (68) qui est reliée à une première électrode (74), laquelle peut être amenée dans une position voisine de l'organisme indésirable (56), mais toutefois espacée de celui-ci, et une deuxième électrode (70) reliée à la terre afin d'obtenir un flux de courant à travers l'organisme indésirable (56) par une transition de charge par le biais de l'écart entre la première électrode (74) et l'organisme indésirable (56), et comprenant des moyens destinés à augmenter de manière ciblée la conductivité de l'air entre la première électrode (74) et l'organisme (56), **caractérisé en ce qu'**une commande (36) est configurée pour contrôler les moyens en se basant sur les signaux d'un système de détection (38) en vue de reconnaître automatiquement un organisme indésirable (56), et la commande (36) est configurée pour contrôler la quantité d'énergie électrique transmise à un organisme indésirable en se basant sur une propriété de l'organisme (56) reconnue au moyen du système de détection (36).

2. Dispositif selon la revendication 1, les moyens destinés à augmenter de manière ciblée la conductivité de l'air étant configurés pour générer un jet d'eau ou un jet de plasma.

3. Dispositif selon la revendication 1 ou 2, la propriété étant la taille de l'organisme (56) et/ou un taux de siccité et/ou la température de l'organisme (56).

4. Dispositif selon la revendication 3, lorsqu'il est fait référence à la revendication 2, la commande (36) étant configurée pour réduire, en cas de besoin, la température de l'organisme (56) au moyen du jet d'eau ou d'un autre jet d'eau.

5. Dispositif selon l'une des revendications 1 à 4, les moyens étant montés sur un véhicule et étant mobiles par rapport au véhicule par un actionneur (78) contrôlé par la commande.

6. Dispositif selon la revendication 5, les moyens, par le biais de l'actionneur (78), pouvant être déplacés transversalement par rapport à la direction de déplacement et/ou pouvant être pivotés autour de l'axe de hauteur et/ou pouvant être pivotés autour d'un axe horizontal orienté transversalement par rapport à la direction vers l'avant.

7. Dispositif selon l'une des revendications précédentes, la commande (36) étant configurée pour ne soumettre la première électrode (74) à une haute tension qu'après que la commande (36) a activé les moyens destinés à augmenter de manière ciblée la conductivité de l'air entre la première électrode (74) et l'organisme (56) .
